# EUROPEAN PATENT APPLICATION

(11) **EP 3 329 982 A1**
(43) Date of publication of application: **06.06.2018**
(21) Application number: 16002572.2
(22) Date of filing: 02.12.2016
(51) Int. Cl.: B01D 59/04

(54) **METHOD AND APPARATUS FOR PRODUCING HEAVY OXYGEN WATER**

(71) Applicant: HWP Production OÜ, 10130 Tallinn (EE)
(72) Inventor: Fenderov, Vadim, 191015 Saint-Petersburg (RU); Selivanenko, Igor, 125130 Moscow (RU); Smirnov, Vladimir, 11218 Järveküla (EE)
(74) Representative: Pikkor, Riho

(57) **Abstract**

The invention relates to a method and apparatus for the production of heavy oxygen water, by vacuum rectification of natural water in a cascade of packed columns. It involves preliminary concentration of O-18 in a serial cascade system, producing an intermediate product that is transferred to a parallel concentration and extraction column cascade system for final concentration of O-18. The feature of the method is that preliminary concentration of O-18 in natural water is carried out simultaneously with extraction of O-18 and deuterium from natural water, and the intermediate product is purified deuterium before final concentration.

The apparatus for carrying out the method comprises an preliminary concentration unit (2) consisting of serial column cascade system, producing the intermediate product, a final concentrating unit (6), consisting of parallel concentration (8) and extraction (7) O-18 column cascade system, a natural water feeding tank (1) connected to the midsection of column (3) of preliminary concentration cascade (2), and a collection tank (4) for collecting water with lowered deuterium content connected to the upper section of the column of previous concentration unit (2); and the preliminary (2) and final (6) concentration units are connected through unit (5) for removing D₂O from the intermediate product.

## Description

### FIELD OF INVENTION

The present invention relates to production of O-18 (heavy oxygen water) for positron-emission tomography and can be used in medicine, agrochemistry and biochemistry. Also the invention allows to get light water depleted of deuterium - «Deuterium-Depleted Water».

### STATE OF ART

In the present time a lot of methods of production O-18 as heavy oxygen water - H₂¹⁸O are known, such as electrolysis, chemical isotope exchange, gas diffusion, thermal diffusion and rectification.

A method of electrolysis is based on the oxygen isotope effect, which was found at the same time as hydrogen isotope effect in water electrolysis [E. W. Washburn, E. R. Smith and M. Frandsen, J. Chem. Phys. 1, 288, 1933]. The limitation of the method is the low value of the isotope effect and respectively low efficiency of the method [H.L Johnston, J. Am. Chem. Soc., 57, 484, 1935 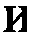 H. Anbar, H. Taube, J. Am. chem. Soc. 78, 3252, 1956 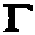 .].

Chemical isotope exchange for producing H₂¹⁸O was realized based on the exchange reaction between nitrogen oxide NO and nitric acid [T. I. Taylor, J. Chim. Phys., 60, 154, 1963]. The limitation of the method is low technical-economic figures of the process due to the difficulties of quantitative flow circulation of transforming nitrogen oxide into nitric acid. In practice, a part of the products of the reaction irreversibly vanishes, transforming into elementary nitrogen or nitric oxides of high oxidation states. Chemical isotope exchange for producing heavy oxygen water based on the exchange reaction between CO₂ and H₂O is also ineffective because of the low speed of exchange reaction [W. T. Boyd, R. R. White, Ind. Eng. Chem. 44, 2302, 1952].

Gas diffusion method for producing heavy oxygen water, as well as electrolysis, are characterized by low enrichment factor. As consequence of this, it is ineffective and impractical [R. Sherr, J. Chim. Phys. 6, 251, 1938].

Thermal diffusion method is more effective than the methods listed above, but it is not suitable for producing large quantities of heavy oxygen water H₂¹⁸O. This is due to the very slow speed of the process [Clusius, Dickel and Becker, Naturwiss, 31, 210, 1943; K. Clusius and K. Schleich, Helv. Chim. Acta, 45, N5, 1702, 1962; E. P. Ageev and G. M. Panczenkov, Atomnaja Energia, 14, No. 5, 494, 1963].

The most effective method is rectification which is used for on industrial scale. The method can be carried out by distilling a number oxygen-containing compounds: molecular oxygen, nitrogen oxide or water.

Molecular oxygen rectification [US6321565, Method and apparatus for the production of heavy oxygen water; US6461583, Method for enrichment of heavy component of oxygen isotopes] requires large amounts of liquid oxygen. So it would be commercially effective only in the presence of a parallel large scale manufacturing of liquid air, when oxygen liquefaction and rectification costs can be charged to air liquefaction. Besides that molecular oxygen rectification doesn't allow to get a product with over 50% heavy oxygen content. That requires an additional stage of burning oxygen from water, followed by water rectification.

Rectification of nitrogen oxide is a sufficiently effective and productive method for obtaining heavy oxygen [Process for the concentration of isotopes of nitrogen and oxygen in nitric oxide, US 3134643 A]. However this method is used in limited cases, because of its explosive hazard which is the drawback of this method.

Method of water rectification for the production of heavy oxygen was first demonstrated in 1937 [Huffman and Urey, Ind. Eng. Chem. 29, 531, 1937]. In the early 50's a technological process based on this method [Dostrovsky, Llewellyn, Vromen, J. Chem. Soc. 3517, 1952] for production highly enriched O-18 in a cascade of rectification columns was realized. This technology, characterized by effectiveness and reliability, underlies most industrial implementations and allows to get H₂¹⁸O with more than 99% enrichment factor.

Method of water rectification is also separately used for producing low deuterium water (so called "light water") - "Deuterium Depleted Water" - that can be used for therapeutic and prophylactic purposes. Such water has a lower deuterium content than natural water. While the deuterium content in natural water is near 0.015%, the deuterium content in "Deuterium Depleted Water" is 0.01% and lower. A method of water rectification for producing the "Deuterium Depleted Water" is described in a patent [Rus-Patent Nº2295493, Method and apparatus for production of the light water]. The only product of this method is low deuterium water. Initial water is supplied on the bottom of the rectification column, and the product is harvested from the top of the column. Concentration of heavy oxygen O-18 does not take place.

As can be seen from the above, the most effective way of producing O-18 is water rectification technology implemented in rectification columns.

Most closely related to the present invention is the method described in an article by Dostrovsky [Dostrovsky, I., Raviv, A.: "Proc. Int. Symp. Isotope Separation, Amsterdam, 1957, p. 336, (1958), North-Holland]. Said method of production of heavy oxygen water is realized by vacuum rectification of natural water in a rectification cascade of packed columns and includes previous concentration of O-18 in a serial cascade system, producing the intermediate product that is transferred to a parallel concentration and extraction cascade column system for final concentration of O-18. Said prototype method involves production of heavy oxygen water enriched over 90% from natural water with 0.2% content of oxygen-18 and 0.015% content of deuterium.

The mentioned article describes the apparatus for production of heavy oxygen water that is the closest to the present invention. The prototype facility consists of a serial rectification column cascade and a final concentration unit of parallel concentration and extraction cascade system of rectification columns for the final concentration of O-18. The productivity of the prototype facility is not over 4 kg of H₂¹⁸O with 90% enrichment factor.

The limitations of the prototype method and apparatus are the following:
- Feed water cycle is not optimal - initial water is supplied to the top of the first cascade step, which do not have an extraction section (a so-called "open scheme"). Therefore oxygen and deuterium extraction ratio from water is negligible leading to loss of energy. The spent water has almost natural amounts of O-18 and deuterium, and dedeuteriated light water cannot be obtained as a product.
- The low efficiency of the rectification columns due to concentration of deuterium in the intermediate product. While concentrating H₂¹⁸O in the columns concentration of deuterium (D₂O) takes place as well. The apparatus does not have a dedeuteriation unit. Due to this deuterium content increases both in the product and the intermediate products. Buildup of deuterium in water leads to rapid decrease of efficiency due to the decrease of the separation factor of H₂¹⁸O/ H₂¹⁶O.
- High energy consumption of the rectification process - the rectification process is based on evaporating water in evaporation cubes located on the bottom of the columns, and the following condensation in condensers at the top (head) of the columns. This process requires a significant amount of energy which is then irreversibly released from the condensers together with spent coolant. As a result production of O-18 is very power-consuming - nearly 2000 KWatt·h/kg of the product.

The main goal for the claimed invention is to remove the listed limitations, notably:
- ineffective energy consumption in the preliminary concentration unit as a result of sub-optimal feeding scheme, that excludes the possibility of obtaining the light water as a product;
- the low effectiveness of the columns of the final concentration unit as a result of the absence of deuterium removing unit;
- high energy consumption of rectification

The solutions to these problems are:
- implementation of simultaneous production of O-18 and dedeuteriated (deuterium-free) water in a single facility by supplying natural feedwater into the midsection of the columns of the first step of the cascade, so the first step columns have both concentration and extraction sections;
- improvement of the effectiveness of the process by integrating deuterium removing units into the facility, which will dedeuteriate the technological flows;
- reduction of energy consumption of rectification by using a heat pump scheme, providing heat transfer from the condenser to the evaporator, using an intermediate heat carrier.

### DISCLOSURE OF INVENTION

The method and apparatus of the claimed invention allow simultaneous production of heavy oxygen water H₂¹⁸O and dedeuteriated water "Deuterium Depleted Water", reduction of the size of rectification columns, and reduction of energy consumption. Obtaining heavy oxygen water has been implemented by the known method of vacuum rectification of water in a column cascade.

The effect of the invention is achieved by implementing the following technological solutions:
- using water rectification technology that allows a high level of extraction of H₂¹⁸O and D₂O from the raw material which is natural water. For this purpose the first columns of the apparatus into which raw material is fed contain an extraction section as well as concentration section as opposed to the prototype where the first columns only have the extraction section. In accordance with the current invention natural water is fed into the middle section of the column between the extraction section and the concentration section. In the prototype water feed is located at the top of the column. In accordance with the current invention light water with low D₂O content is collected from the top of the first columns whereas water with increased H₂¹⁸O is collected from the bottom.
- removing deuterium D₂O from the intermediate products obtained from initial H₂¹⁸O concentration, with a special dedeuteriation unit. Deuterium is removed by electrolytic decomposition of the intermediate product to oxygen, O-18 enriched oxygen and deuterium enriched hydrogen, followed by back-transformation of obtained oxygen into water. This back-transformation is carried out by letting oxygen interact with the hydrogen obtained from low-deuterium light water;
- using a heat pump with an intermediate heat carrier in the power scheme. Condensation heat of water vapour is returned from the condensers of the rectification columns to the evaporators by the means of intermediate heat carrier.

The claimed invention involves a method of producing heavy oxygen water by vacuum rectification of natural water in a cascade of packed columns, including preliminary concentration of O-18 in a serial cascade system which produces an intermediate product transferred to a cascade of parallel O-18 concentration and extraction columns for final concentration of O-18. The novelty lies in using natural water for preliminary concentration of O-18 to obtain the intermediate product with simultaneous extraction of O-18 and deuterium from natural water, whereas the intermediate product is purified of deuterium before final O-18 concentration.

According to one embodiment of the claimed invention, low deuterium water is collected from the extraction section of the preliminary concentration columns. Producing of the additional product - light water - allows additional profit thus improving the economic feasibility of the process.

According to another embodiment of the claimed invention, deuterium decontamination (dedeuteriation) of the intermediate product is implemented by electrolytic decomposition of water into hydrogen and oxygen followed by conversion of obtained oxygen into water through interaction with hydrogen with lowered deuterium content. Hydrogen with reduced deuterium content is obtained by electrolytic decomposition of light water. This feature increases the efficiency of concentrating H₂¹⁸O in rectification columns. It allows to reduce the size of rectification columns or to improve yield in existing ones.

According to yet another embodiment of the claimed invention, during vacuum rectification of natural water heat from water vapour condensation at the top part of the columns is transferred by the means of an intermediate heat carrier to the bottom of the columns to be used for evaporating water. This feature reduces the energy cost of the rectification and improves the effectiveness of the claimed method and apparatus.

According to one embodiment of the claimed invention, water taken from the extraction section of the preliminary concentration columns is used to obtain hydrogen with lowered deuterium content. This feature allows obtaining heavy O-18 water as a product in which the deuterium content does not exceed its natural range. That excludes the necessity of additional processing of the product and thus reduces costs.

The claimed invention involves an apparatus for implementing the above-mentioned method including a preliminary concentration unit consisting of a serial cascade column system that produces the intermediate product, and a final concentration unit, consisting of a parallel concentration and O-18 extraction column cascade system, characterized in that the apparatus comprises a natural water feeding tank connected to the midsection of the columns of the preliminary concentration cascade, and a collection tank for collecting water with lowered deuterium content connected to the upper section of the column of preliminary concentration unit, and the preliminary and final concentration units are connected through a unit for removing D₂O from the intermediate product. This feature provides improvement of the effectiveness of O-18 concentration in the final concentration unit that reduces costs.

According to one embodiment of the claimed invention, the rectification columns are equipped with a heat pump and an intermediate heat carrier for transferring the heat from vapour condensation in the upper sections of the columns to the bottom section to be used for evaporating water. This feature provides energy cost reduction and also reduces the coolant consumption for vapour condensation.

According to another embodiment of the claimed invention, the intermediate product dedeuteriation unit comprises a first electrolyzer for decomposing water into hydrogen and oxygen, and a second electrolyzer for decomposing water with reduced deuterium content taken from the upper section of the preliminary concentration unit, and a burner for burning up the electrolytic oxygen from the first electrolyzer in the hydrogen flow from the second electrolyzer. This feature provides low deuterium content in intermediate products improving the concentration efficiency of H₂¹⁸O in the columns and excludes the necessity of additional processing to reduce deuterium content to natural level. That improves the quality of the product and reduces the operational costs.

### BRIEF DESCRIPTION OF DRAWINGS

Claimed invention is illustrated by the reference to figures Fig. 1-3.
- Fig. 1: - facility installation diagram.
- Fig. 2: - normalization unit diagram.
- Fig. 3: - heat pump utility flow diagram of the columns.

### IMPLEMENTATION OF INVENTION

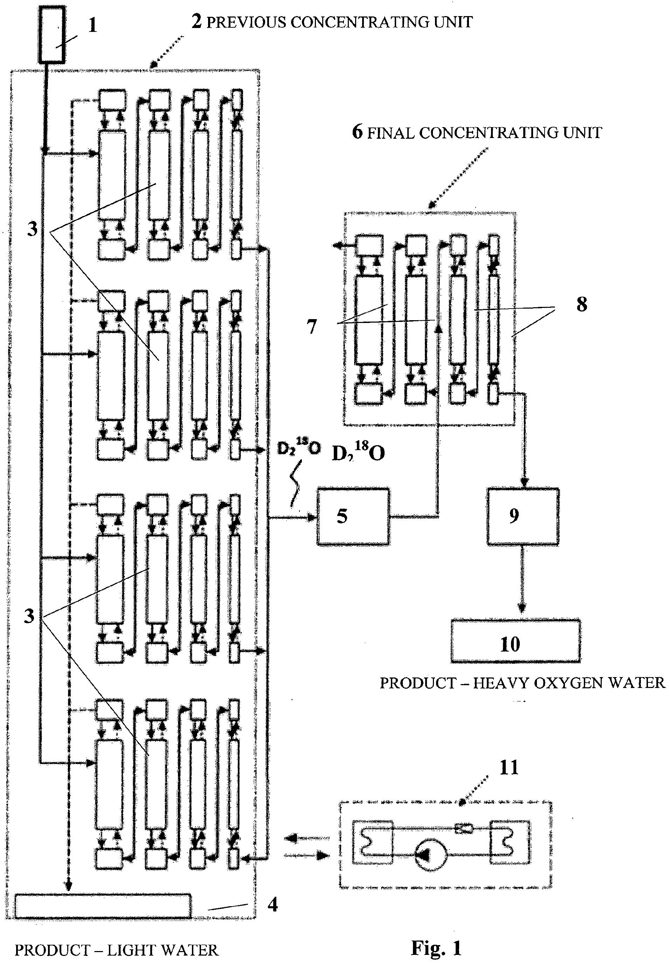

The facility (Fig. 1) provides production of 95% and higher enriched H₂¹⁸O.

The examples provided in the present description as well as the alternative features are only a few possible implementation variants of the claimed invention and do not limit the scope of protection of the invention. All changes and modifications, which are clear to a professional in this technical field, to the extent expressed in the claims are considered to be included in the scope of protection of the present invention.

To reach the goal of the invention a method and an apparatus is provided for simultaneously producing O-18 oxygen isotope and deuterium-free water.

The facility (fig. 1) corresponding to the claimed method works as is described below. Pure natural water is supplied from tank 1 to preliminary concentration unit 2 that includes several independent parallel lines (cascades) n (for ex. n=4, as shown in fig. 1) of serial rectification columns (steps of the cascade) m (for ex. m=4, as shown in fig. 1). Raw material - water with natural isotope content - is fed into the midsection of the first step column of every cascade 3. At the top of the rectification columns the water has reduced content of heavy hydrogen (deuterium) and heavy oxygen (O-18 and O-17) isotopes, and at the bottom of the rectification columns respectively it has increased heavy hydrogen and oxygen isotopes content. Water taken from the top section of the first step columns of every cascade has reduced content of deuterium and O-18 and constitutes an industrial product - light water. It collected in tank 4. Water taken from the bottom section of the first step columns has increased content of deuterium and O-18 and is fed to the next cascade steps, as shown on Fig. 1. At the outlet of unit 2 an intermediate product is obtained - water with significant content of O-18 and deuterium.

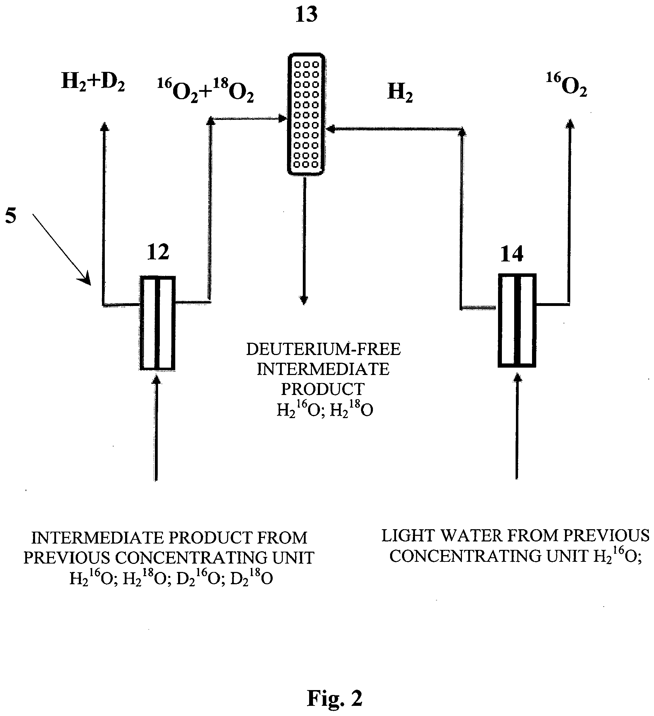

Said intermediate product is fed from unit 2 to unit 5, so-called normalization unit (fig. 2) where electrolytic decomposition of water into oxygen with significant content of O-18 and hydrogen containing deuterium. Hydrogen containing deuterium, diluted with air to the safe explosion-proof concentration level, is removed. Oxygen enriched with O-18 burns up in the flow of hydrogen, received from the electrolytic decomposition of light water. Thereby unit 5 includes no less than two electrolyzers as shown in Fig. 2. The first electrolyzer 12 decomposes the intermediate product from unit 2 into hydrogen and oxygen. The second electrolyzer 14 decomposes a part of light water into hydrogen and oxygen. Light water has lowered deuterium content. Respectively, hydrogen obtained from decomposing said light water has reduced deuterium content. When oxygen from the first electrolyzer is burnt in the flow of hydrogen from the second electrolyzer, water with significant content of O-18 and reduced deuterium content is obtained. Said intermediate product is fed into unit 6 for final concentration. This intermediate product contains practically no deuterium, consequently, maximum separation factor for oxygen isotopes can be reached, and that reduces separation costs and the size of unit 6 as well as the facility filling time, and all that results in increased efficiency of further concentration. According to a variant of implementation, the intermediate normalization unit 6 includes two parallel rectification cascades: extraction cascade 7 and concentration cascade 8.

Water from the top section of the last column 7 of the cascade's extraction part is removed. Water from the bottom of the last column 8 of the cascade's concentration part has over 95% O-18 content and is an industrial product. The product undergoes final purification in unit 9 and collected in tank 10.

Unit 9 serves for chemical (ion-exchange filters) and biological (UV-treatment and carbon filters) water treatment using traditional methods.

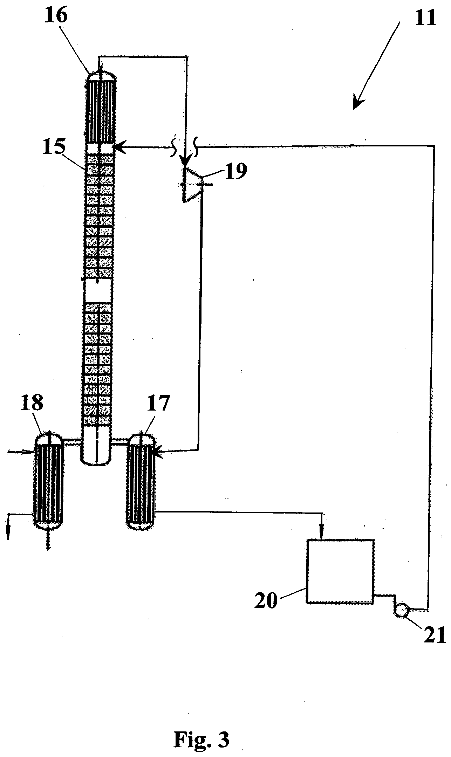

The facility includes unit 11 (fig. 3) that fulfils heat pump functions: vapour condensation heat is returned from condensers 16 of rectification columns 15 to cubes 17 - evaporators. The heat obtained from vapour condensation in parallel condensers 16 is transferred to the intermediate heat carrier, which is circulated by the means of pump 21. It is further compressed by compressor 19, rising its temperature and pressure, and then fed to the heat-exchanger 20 where it releases the heat for water evaporation. Hence, the rectification energy becomes more cost effective due to reduced cost of heating energy and cooling water.

In order to increase the separation factor of oxygen isotopes, the separating part of the facility -preliminary and final concentration columns - works under the low pressure of 15-20 kPa. The pressure is maintained by the means of a vacuum system.

In accordance with the claimed technical solution the facility provides highly effective and energy efficient production of 100 kg/year of water 95% enriched with O-18 and 300 000 kg/year of light dedeuteriated water.

**Table 1. Dimensions and data of units**

| Preliminary concentration unit | | | | |
|---|---|---|---|---|
| Step | 1 | 2 | 3 | 4 |
| Column diameter, mm | 300 | 200 | 125 | 80 |
| Packed column height | 18m | 18m | 18m | 18m |
| Spiral prismatic end, mm | 5x5 | 5x5 | 3x3 | 2x2 |
| Number of columns | 16 | 16 | 16 | 16 |
| Steam flow in column, kg/h | 90 | 40 | 14,4 | 6,48 |
| Concentration of O-18 at the top of the column, % | 0,2 | 0,45 | 1,5 | 7,5 |
| Concentration of O-18 in the cube, % | 0,45 | 1,5 | 7,5 | 45 |
| | | | | |

| Final concentration unit | | | | |
|---|---|---|---|---|
| | Extraction section | | Concentration section | |
| Step | 1 | 2 | 3 | 4 |
| Column diameter, mm | 65 | 65 | 65 | 65 |
| Spiral prismatic end, mm | 2x2 | 1,5x1,5 | 2x2 | 1,5x1,5 |
| Packed column height | 18m | 18m | 18m | 18m |
| Number of columns | 4 | 4 | 4 | 4 |
| Steam flow in column, kg/h | 1 | 10 | 45 | 80 |
| Concentration of O-18 at the top of the column, % | 10 | 45 | 80 | 98 |
| Concentration of O-18 in the cube, % | 2,5 | 2,5 | 2,5 | 2,5 |

### Reference numbers

1 - raw material (natural water) tank;
2 - cascaded preliminary concentration unit (the figure depicts four cascades) of serial rectification columns (in the figure each cascade consists of four columns);
3 - first column (step) of the cascade that contains an extraction section and a concentration section;
4 - light water tank;
5 - intermediate product dedeuteriation unit;
6 - final concentration unit that contains parallel cascades of extraction columns 7 (in the figure each cascade consists of two columns) and cascades of concentration columns 8 (in the figure each cascade consists of two columns);
7 - extraction columns of the final concentration unit;
8 - concentration columns of the final concentration unit;
9 - final product purification unit for heavy oxygen water;
10 - final product tank for heavy oxygen water;
11 - heat pump
12 - electrolyzer for electrolytic decomposition of water - intermediate product from preliminary concentration unit - into hydrogen and oxygen;
13 - burner unit for transforming hydrogen and oxygen from electrolyzer 12 into water;
14 - electrolyzer for electrolytic decomposition of light water - intermediate product from preliminary concentration unit - into hydrogen and oxygen;
15 - rectification column;
16 - rectification column condenser;
17 - cube - rectification column vaporizer in the flow path of the intermediate heat carrier;
18 - cube - rectification column vaporizer in the flow path of the outside heat carrier used during the activation stage of the column;
19 - compressor;
20 - intermediate heat carrier tank;
21 - circulation pump for heat carrier.

## Claims

1. A method for producing heavy oxygen water, by vacuum rectification of natural water in a cascade of packed columns, including preliminary concentration of O-18 in a serial cascade system which produces an intermediate product transferred to a cascade of parallel O-18 concentration and O-18 extraction columns for the final concentration of O-18, **characterized in that** that initial concentration of O-18 from natural water to obtain the intermediate product is carried out simultaneously with extraction of O-18 and deuterium from natural water, whereas the intermediate product is purified of deuterium before final O-18 concentration.

2. A method according to claim 1, **characterized in that** water with reduced deuterium content is collected from the extraction section of the preliminary concentration columns.

3. A method according to claim 1, **characterized in that** deuterium decontamination (dedeuteriation) of the intermediate product is realized by electrolytic decomposition of water into hydrogen and oxygen followed by conversion of obtained oxygen into water through interaction with hydrogen with lowered deuterium content.

4. A method according to claim 1, **characterized in that** vacuum rectification of natural water is carried out with transferring the heat from water vapour condensation from the top part of the columns to the bottom of the columns to evaporate water using an intermediate heat carrier.

5. A method according to claim 3, **characterized in that** water taken from the extraction section of the intermediate concentration columns is used to obtain hydrogen with lowered deuterium content.

6. An apparatus for carrying out the method according to claim 1 including a preliminary concentration unit (2) consisting of serial cascade column system, producing the intermediate product and a final concentration unit (6), consisting of parallel concentration (8) and O-18 extraction column cascade system (7), **characterized in that** the first column of preliminary concentration unit (2) comprises an extraction section, a concentration section and a feeding tank (1) for feeding natural water into the midsection of the column (3) and a collection tank (4) for collecting water with reduced deuterium content from the upper section of the column while the preliminary concentration unit (2) and the final concentration unit (6) are connected through a dedeuteriation unit (5) for purifying the intermediate product.

7. An apparatus according to claim 6, **characterized in that** the rectification columns are equipped with heat pumps (11) and intermediate heat carriers (20) for transferring the heat from water vapour condensation in the upper sections of the columns to the bottom section to be used for evaporating water.

8. An apparatus according to claim 6, **characterized in that** the dedeuteriation unit (5) of intermediate product comprises a first electrolyzer (12) for decomposing water into hydrogen and oxygen, and a second electrolyzer (14) for decomposing water with reduced deuterium content taken from the upper section of the preliminary concentration unit, and a burner (13) for burning up the electrolytic oxygen from the first electrolyzer in the hydrogen flow from the second electrolyzer.
